# EUROPÄISCHE PATENTSCHRIFT

(11) **EP 0 792 201 B1**
(45) Veröffentlichungstag und Bekanntmachung des Hinweises auf die Patenterteilung: **12.01.2000**
(21) Anmeldenummer: 95937811.8
(22) Anmeldetag: 21.10.1995
(51) Int. Cl.: B23B 27/16

(54) **SCHNEIDPLATTE ZUR SPANABHEBENDEN BEARBEITUNG VON WERKSTÜCKEN**
CUTTING INSERT FOR MACHINING WORKPIECES AND SIMULTANEOUSLY REMOVING CUTTINGS
PLAQUETTE DE COUPE POUR USINAGE DE PIECES PAR ENLEVEMENT DE COPEAUX

(30) Priorität: 19.11.1994 DE 4441215
(43) Veröffentlichungstag der Anmeldung: 03.09.1997
(73) Patentinhaber: KOMET Präzisionswerkzeuge Robert Breuning GmbH, D-74354 Besigheim (DE)
(72) Erfinder: ENDERLE, Klaus, D-71691 Freiberg (DE)
(74) Vertreter: Wolf, Eckhard, Dr.-Ing.
(86) Internationale Anmeldenummer: EP9504130
(87) Internationale Veröffentlichungsnummer: WO9615869

(56) Entgegenhaltungen:
- DE-A- 2 840 610
- DE-A- 4 141 368
- US-A- 4 335 984

## Beschreibung

Die Erfindung betrifft eine Schneidplatte zur spanabhebenden Bearbeitung von metallischen Werkstücken mit mindestens einer durch eine Spanfläche und eine Freifläche begrenzten Schneidkante, wobei die Spanfläche einen an die Schneidkante anschließenden Spanflächenabschnitt mit bezüglich der Schneidplattenebene positivem Spanwinkel und mehrere parallel zur Schneidkante im Abstand voneinander aufgereihte, in den Spanflächenabschnitt eingeformte, durch ihre Oberkante gegenüber dem Spanflächenabschnitt begrenzte, die Schneidkante teilweise durchdringende Ausnehmungen aufweist, wobei auf der der Schneidkante gegenüberliegenden Seite der Ausnehmungen eine über den Spanflächenabschnitt überstehende, durch eine schneidkantenseitige untere und eine schneidkantenabseitige obere Begrenzungslinie begrenzte Spanformstufe angeordnet ist und wobei die Spanfläche im Bereich der Ausnehmungen einen neutralen oder negativen Spanwinkel bezüglich der Schneidplattenebene aufweist (siehe DE-A-41 41 368).

Es ist bekannt, daß mit Hilfe verschiedener Arten von Ausnehmungen in der Spanfläche der Spanbruch und die Spanentfernung beim Schneidvorgang begünstigt werden kann (DE-C-28 40 610). Der Span erhält dort beim Schneidvorgang eine Wellenstruktur und damit eine größere Steifigkeit, die zum leichteren Brechen notwendig ist. Vor allem beim Bohren sind kleine, kurzgebrochene Späne wichtig für die ungestörte Entspanung. Hierzu bedarf es zusätzlich einer geeigneten Verformung des ausgesteiften Spans, die zu einem sicheren Spanbruch führt.

Weiter ist es bei einer Schneidplatte der eingangs angegebenen Art bekannt (DE-A-41 41 368), daß die die Schneidkante teilweise durchdringenden Ausnehmungen im wesentlichen eine Trapezform mit zur Spanfläche hin geöffneten Trapezflanken aufweisen. Mit diesen Maßnahmen soll erreicht werden, daß auch bei hohen Vorschüben eine stabile Spanführung und -umlenkung bei gerinstmöglichem Verschleiß der Schneidkante gewährleistet ist.

Ausgehend hiervon liegt der Erfindung die Aufgabe zugrunde, die Schneidplatte der eingangs angegebenen Art dahingehend zu verbessern, daß nur ein geringer Schneidwiderstand und eine geringe Wärmeübertragung vom Span auf die Schneidplatte auftritt und daß beim Bearbeitungsvorgang die Bildung kleiner, kurz gebrochener Späne begünstigt wird.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt vor allem der Gedanke zugrunde, den im Zuge des Bearbeitungsvorgangs mit einer Wellenstruktur versehenen Span auf engstem Raum einer geeigneten Verformung zu unterziehen, durch die er kleinstückig zerbrochen wird. Um dies zu erreichen, wird gemäß der Erfindung vorgeschlagen, daß die Ausnehmungen als die Schneidkante durchdringende, mit ihrer tiefsten Mantellinie im wesentlichen senkrecht an die Freifläche anschließende Zylinderkalotten, Kegelkalotten, Elipsoidkalotten oder Paraboloidkalotten ausgebildet sind. Mit dieser Maßnahme wird erreicht, daß der in Querrichtung wellblechartig gekrümmte Span nur punktuell gegen die Spanformstufe anschlägt, so daß nur ein geringer Schneidwiderstand und eine geringe Wärmeübertragung vom Span auf die Schneidplatte auftritt.

Eine weitere bevorzugte Ausgestaltung der Erfindung sieht vor, daß der Spanflächenabschnitt zwischen Schneidkante und Spanformstufe in Spanlaufrichtung konkav gekrümmt ist, wobei die Spanformstufe zwischen Spanflächenabschnitt und Spanflächenplateau tangential an den konkav gekrümmten Spanflächenabschnitt anschließt und ebenfalls konkav gekrümmt ist und wobei das Spanflächenplateau oberhalb der Schneidkante angeordnet ist. Beim Bearbeitungsvorgang stößt der mit einer quer verlaufenden Wellenstruktur versehene Span gegen die Spanformstufe und wird dort scharf umgelenkt.

Die Umlenkung führt zu einem Spanbruch, so daß kleine kurz gebrochene Späne entstehen.

Weiter ist es vorteilhaft, wenn die Spanformstufe geradlinig oder wellenförmig im wesentlichen parallel zur Schneidkante verläuft und die kalottenförmigen Ausnehmungen mit ihrer schneidkantenseitigen Begrenzungslinie tangiert oder im Abstand von diesen angeordnet ist.

Wenn die Spanformstufe an ihrer schneidkantenseitigen Begrenzungslinie so wellen- und zick-zack-förmig geschwungen ist, daß sie nicht in die kalottenförmigen Ausnehmungen eindringt, entstehen zusätzliche Keilwirkungen im Abstandsbereich zwischen den Ausnehmungen, die dem Spanbruch Vorschub leisten. Eine weitere Verbesserung in dieser Hinsicht kann dadurch erzielt werden, daß die Spanformstufe mit ihrer schneidkantenseitigen Begrenzungslinie jeweils keilförmig mit zur Schneidkante weisender Keilspitze in die kalottenförmigen Ausnehmungen eingreift und dort deren Oberkante bildet. In beiden Fällen kann die Spanformstufe mit ihrer schneidkantenabseitigen Begrenzungslinie einen im wesentlichen gleichphasig oder gegenphasig parallel zur schneidkantenseitigen Begrenzungslinie verlaufenden wellen- und/oder zick-zack-förmigen Verlauf aufweisen.

Im Interesse eines besonders kleinen Schneidwiderstands und einer geringen Wärmeübertragung von den Spänen auf die Schneidplatte ist es von Vorteil, wenn das Abstandsmaß zwischen Schneidkante und plateauseitigem Begrenzungsrand der Ausnehmungen kleiner als 50 %, vorzugsweise 20 bis 30 % des Abstands zwischen Schneidkante und schneidkantenseitiger Plateaukante ist.

Der Schneideinsatz kann mit mehreren, ein Vieleck begrenzenden, von kalottenförmigen Ausnehmungen durchdrungenen Schneidkanten versehen sein, während die gegebenenfalls wellenförmig und/oder zick-zack-förmig geschwungenen Begrenzungslinien der Spanformstufen im Abstand von den Schneidkanten ein entsprechendes umlaufendes Vieleck bilden können.

Um einen Plattenbruch vor allem an der Innenplatte eines Vollbohrers zu vermeiden, wird gemäß einer vorteilhaften oder alternativen Ausgestaltung der Erfindung vorgeschlagen, daß die Schneidkanten im Bereich zwischen den einander über Eck benachbarten Ausnehmungen partiell angefast sind. Damit die gleichen Schneidplatten als Innen- und Außenplatten eines Vollbohrers eingesetzt werden können, ist es vorteilhaft, wenn die Schneidkanten im Eckbereich zwischen dem Eck und nur einer der benachbarten Ausnehmungen unsymmetrisch angefast sind. Zu diesem Zweck können bei Bedarf die Schneidkanten in Fortsetzung der vom Eck ausgehenden Eckfasen auch im Bereich zwischen der dem Eck benachbarten Ausnehmung und der nächsten und gegebenenfalls der übernächsten Ausnehmung angefast werden.

Ein besonders vorteilhaftes Schneid- und Spanbruchverhalten wird erzielt, wenn der Spanwinkel des konkaven Spanflächenabschnitts 15° bis 25° beträgt, während er im Bereich der Ausnehmungen an der Stelle der Schneidkante 0° bis -10° beträgt.

Im folgenden wird die Erfindung anhand einiger in der Zeichnung in schematischer Weise dargestellter Ausführungsbeispiele näher erläutert. Es zeigen:
- Fig. 1: eine Draufsicht auf eine trigonförmigen Schneidplatte;
- Fig. 2a: bis i einen vergrößerten Ausschnitt aus Fig. 1 mit neun verschiedenen Ausführungsformen der Spanformstufen;
- Fig. 3: einen Schnitt entlang der Schnittlinie B-B der Fig. 2e;
- Fig. 4a: ein abgewandeltes Ausführungsbeispiel einer trigonförmigen Schneidplatte in schaubildlicher Darstellung;
- Fig. 4b: eine Draufsicht auf die Schneidplatte nach Fig. 4a;
- Fig. 4c: einen Schnitt entlang der Schnittlinie C-C der Fig. 4b;
- Fig. 4d: und e eine Ansicht in Richtung D und E der Fig. 4b in vergrößerter geschnittener Darstellung
- Fig. 5: eine trigonförmige Schneidplatte mit unsymmetrischer Eckfase in einer Darstellung entsprechend Fig. 4a.

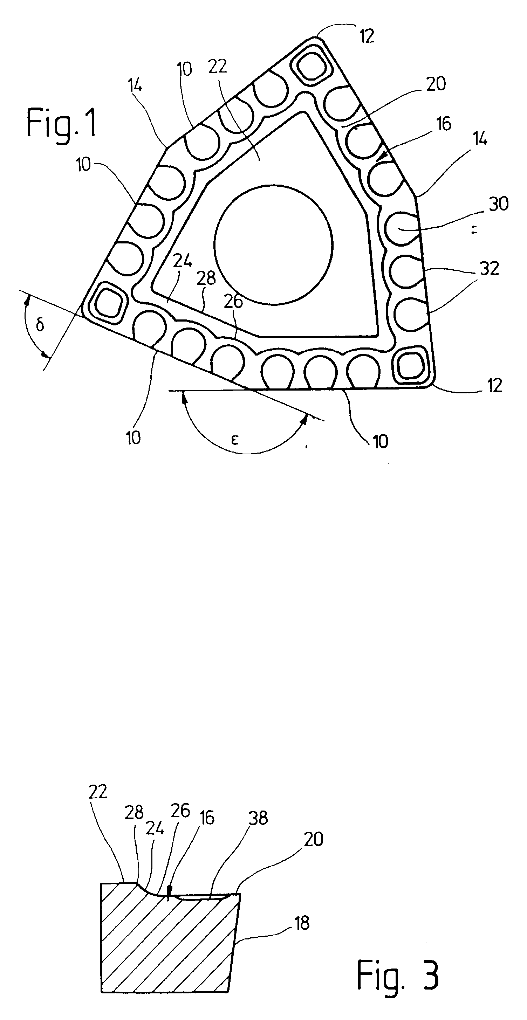

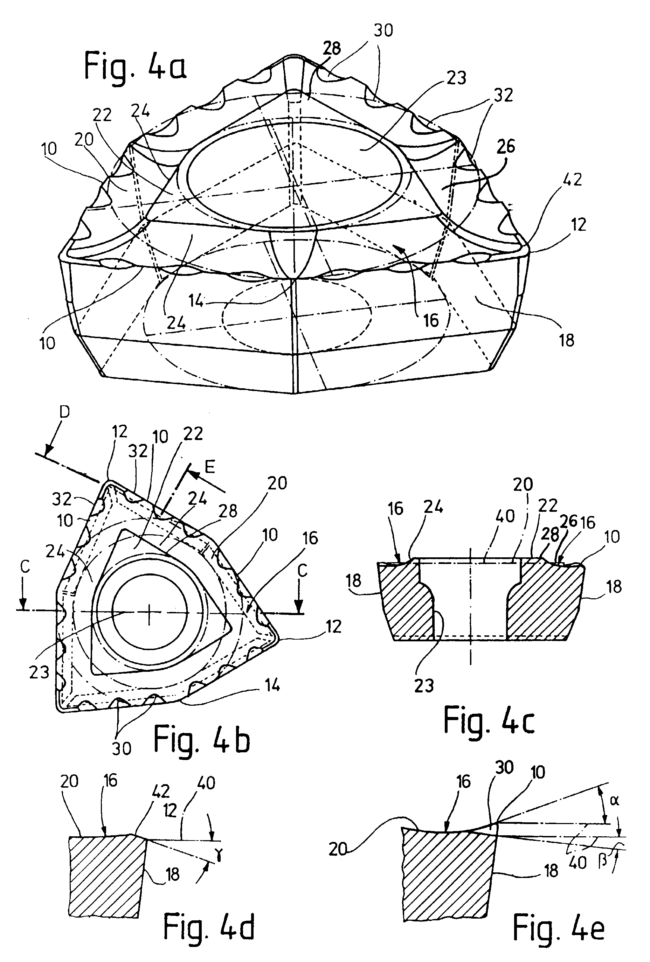

Die in Fig. 1 und 4a gezeigten Schneidplatten sind als im Umriß sechseckige Wendeschneidplatten ausgebildet, deren Schneidkanten 10 an den Ecken 12 und 14 abwechselnd durch einen spitzen Eckwinkel δ und einen stumpfen Eckwinkel ε miteinander verbunden sind. Derartige Schneidplatten werden beispielsweise in Vollbohrern eingesetzt, in denen jeweils zwei durch den stumpfen Eckwinkel ε voneinander getrennte Schneidkanten 10 bis hin zu den benachbarten Ecken 12 paarweise wirksam sind. Die Schneidkanten 10 sind jeweils durch den Übergang zwischen der Spanfläche 16 und der benachbarten Freifläche 18 gebildet. Die Spanfläche 16 ist in einen schneidkantennahen, im wesentlichen ebenen Flächenabschnitt 20 und ein höher gelegenes, schneidkantenfernes Plateau 22 unterteilt, die in Spanlaufrichtung durch eine Spanformstufe 24 miteinander verbunden sind. Die Spanformstufe 24 geht an ihrer schneidkantenseitigen Begrenzungslinie 26 tangential in den Flächenabschnitt 20 über, während sie an ihrer schneidkantenabseitigen Begrenzungslinie 28 scharfkantig in das Plateau 22 übergeht (Fig. 3 und 4c). Im Zentrum des Plateaubereichs 22 befindet sich ein Durchbruch 23 für den Durchgriff einer nicht dargestellten Befestigungsschraube.

Die zu den einzelnen Schneidkanten gehörenden Flächenabschnitte 20 und Spanformstufen 24 sind über die Ecken, 12, 14 miteinander verbunden und bilden eine umlaufende zusammenhängende Fläche bzw. Stufe. In der Spanfläche 16 befinden sich im Bereich der Flächenabschnitte 20 entlang den Schneidkanten 10 nebeneinander im Abstand voneinander angeordnete kalottenförmige Ausnehmungen 30, die bis zur Schneidkante 10 verlaufen und diese in einem Kantenabschnitt 32 durchdringen. Bei den Ausführungsbeispielen nach Fig. 1 bis 3 ist die Ausnehmung 30 im schneidkantennahen Bereich 34 zur Schneidkante hin konvergierend kegelkalottenförmig ausgebildet, während sie im schneidkantenfernen Bereich 36 Kugelkalottenform aufweist. Im Bereich der spitzen Ecken 12 befindet sich im Abstand von der jeweiligen Schneidkante 10 und der Ecke 12 zusätzlich eine muldenförmige Vertiefung 38 im ebenen Flächenabschnitt 20, deren Tiefe kleiner als die der kalottenförmigen Ausnehmungen 30 ist.

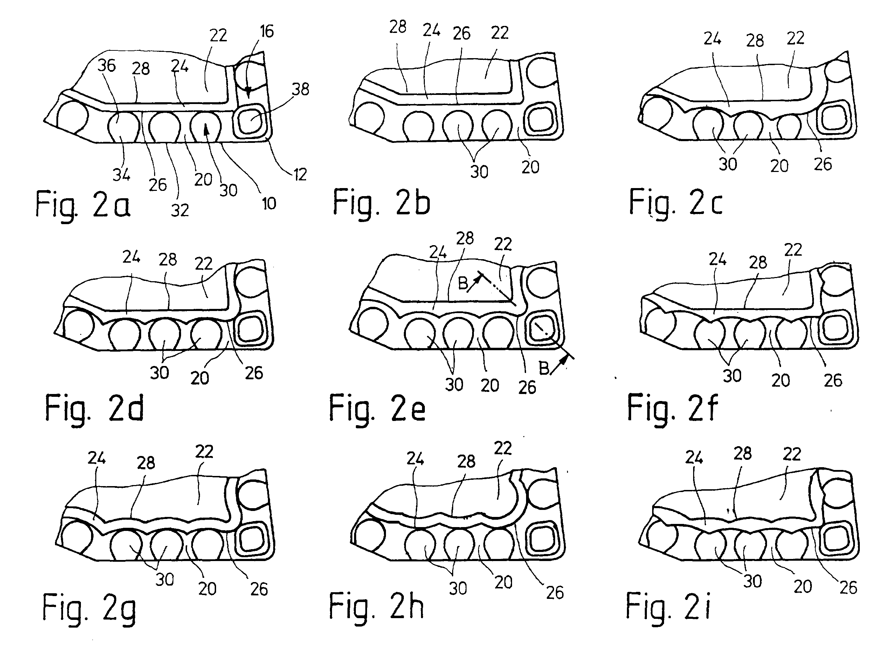

Die in den Fig. 2a bis i gezeigten Ausführungsbeispiele unterscheiden sich vor allem in der Gestalt der Spanformstufe 24 voneinander. Die Spanformstufe 24 kann an ihrer inneren Begrenzungslinie 26 entweder geradlinig parallel zur Schneidkante 10 die Ausnehmungen 30, 38 tangierend (Fig. 2a) oder in kleinem Abstand von diesen (Fig. 2b) verlaufen. Weiter kann die Spanformstufe 24 an ihrer schneidkantenseitigen Begrenzungslinie 26 wellenförmig und/oder zick-zack-förmig verlaufen, und zwar so, daß sie die kalottenförmigen Ausnehmungen 30 tangieren (Fig. 2c, d, g, h), im Abstand von diesen verlaufen (Fig. 2e) oder abschnittsweise in diese eingreifen (Fig. 2f und i). Dadurch wird durch Keilbildung im Bereich der Spanformstufe im Abstandsbereich zwischen den Ausnehmungen 30 (Fig. 2c, d, e und g) einerseits oder innerhalb der kalottenförmigen Ausnehmungen 30 (Fig. 2f, h und i) andererseits eine zusätzliche bruchfördernde Spanverformung erzielt.

Auch die plateauseitige Begrenzungslinie 28 der Spanformstufe 24 kann entweder geradlinig (Fig. 2a, b, c, d, e, f) oder wellenförmig (Fig. 2g, h, i) verlaufen, wobei im letzteren Falle die Begrenzungslinien 26, 28 der Spanformstufe 24 entweder gleichläufig (Fig. 2g, h) oder gegenläufig (Fig. 2i) gewellt sein können.

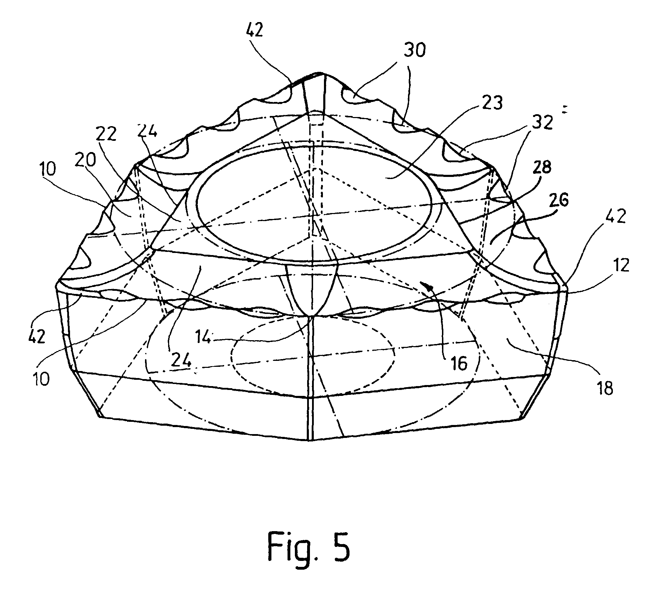

Bei den in Fig. 4a bis e und 5 gezeigten Ausführungsbeispielen sind der Spanflächenabschnitt 20 und die daran anschließende Spanformstufe 24 in Spanlaufrichtung konkav, tangential ineinander übergehend ausgebildet. Der Spanwinkel α in bezug auf die Plattenebene 40 ist an der Stelle der Schneidkante 10 positiv und beträgt etwa 15 bis 20° (Fig. 4e). Die Ausnehmungen 30 sind als die Schneidkante 10 durchdringende, kurze Zylinderkalotten mit zur Freifläche 18 etwa senkrechter Zylinderachse ausgebildet. Der Schneidwinkel β bezüglich der Plattenebene 40 ist dort negativ und beträgt ca. -5° (Fig. 4e). Das Abstandsmaß zwischen Schneidkante 10 und plateauseitigem Begrenzungsrand der Ausnehmungen 30 ist relativ klein und beträgt nur etwa 20 bis 30 % des Abstands zwischen der Schneidkante 10 und der schneidkantenseitigen Plateaubegrenzungslinie 28.

Um eine Bruchgefahr im Bereich der Plattenecken 12 vor allem beim Einsatz der Schneidplatte als Innenplatte eines Vollbohrers zu vermeiden, sind die Schneidkanten 10 im Bereich zwischen den einander über Eck 12 benachbarten Ausnehmungen 30 mit einer Fase 42 mit einem Fasenwinkel γ von etwa 20° gegenüber der Plattenebene 40 versehen (Fig. 4a und d).

Bei dem in Fig. 5 gezeigten Ausführungsbeispiel sind die Eckfasen 42 jeweils zwischen der Plattenecke 12 und nur einer der benachbarten Ausnehmungen 30 angeordnet, während zwischen der Ecke 12 und der anderen Ausnehmung 30 die Schneidkante 10 scharfkantig ausgebildet ist. Bei Vollbohrern mit radial gegeneinander versetzten Schneidplatten weisen die Schneidplatten mit ihrer angefasten Ecke radial zur Bohrermitte und mit ihrer scharfkantigen Ecke nach außen. Damit ist es trotz der Eckfasen ohne Einbuße an Schnittqualität möglich, die gleichen Schneidplatten als Innenplatte und als Außenplatte eines Vollbohrers einzusetzen.

Grundsätzlich ist es möglich, auch die an die zur Ecke 12 benachbarte Ausnehmung anschließenden Schneidkantenabschnitte bis zur nächsten oder zur übernächsten Ausnehmung 30 mit einer Fase zu versehen. Diese Fase sollte allerdings nicht über die jeweils benachbarte stumpfe Schneidkantenecke 14 hinweggeführt werden.

Zusammenfassend ist folgendes festzustellen: Die Erfindung bezieht sich auf eine Schneidplatte zur spanabhebenden Bearbeitung von vorzugsweise metallischen Werkstücken. Der Schneideinsatz weist mindestens eine Schneidkante 10 im Übergangsbereich zwischen einer Spanfläche 16 und einer Freifläche 18 auf, wobei die Spanfläche 16 einen im wesentlichen parallel zur Schneidkante 10 verlaufenden ebenen Flächenabschnitt 20 und mehrere parallel zur Schneidkante 10 im Abstand voneinander aufgereihte, in den Flächenabschnitt 20 eingeformte, die Schneidkante 10 teilweise durchdringende kalottenförmige Ausnehmungen aufweist. Um eine störungsfreie Entspanung unter Bildung kurzgebrochener Späne zu gewährleisten, ist gemäß der Erfindung eine auf der der Schneidkante 10 gegenüberliegenden Seite der Ausnehmungen angeordnete, über den Flächenabschnitt hinaus ansteigende, durch eine schneidkantenseitige untere und eine schneidkantenabseitige obere Begrenzungslinie 26,28 begrenzte Spanformstufe 24 vorgesehen, deren Begrenzungslinien 26, 28 geradlinig oder gewellt sein können.

## Patentansprüche

1. Schneidplatte zur spanabhebenden Bearbeitung von metallischen Werkstücken mit mindestens einer durch eine Spanfläche (16) und eine Freifläche (18) begrenzten Schneidkante (10), wobei die Spantläche (16) einen an die Schneidkante (10) anschließenden Spanflächenabschnitt (20) mit bezüglich der Schneidplattenebene positivem Spanwinkel (α) und mehrere parallel zur Schneidkante (10) im Abstand voneinander aufgereihte, in den Spanflächenabschnitt eingeformte, durch ihre Oberkante gegenüber dem Spantlächenabschnitt (20) begrenzte, die Schneidkante (10) teilweise durchdringende Ausnehmungen (30) aufweist, wobei auf der der Schneidkante (10) gegenüberliegenden Seite der Ausnehmungen (30) eine über den Spanflächenabschnitt (20) überstehende, durch eine schneidkantenseitige untere und eine schneidkantenabseitige obere Begrenzungslinie (26,28) begrenzte Spanformstufe (24) angeordnet ist und wobei die Spantläche im Bereich der Ausnehmungen (30) einen neutralen oder negativen Spanwinkel (β) bezüglich der Schneidplattenebene (40) aufweist, **dadurch gekennzeichnet**, daß die Ausnehmungen (30) als die Schneidkante (10) durchdringende, mit ihrer tiefsten Mantellinie im wesentlichen senkrecht an die Freifläche (18) anschließende Zylinderkalotten, Kegelkalotten, Elipsoidkalotten oder Paraboloidkalotten ausgebildet sind.

2. Schneidplatte nach Anspruch 1, wobei der Spantlächenabschnitt (20) zwischen Schneidkante (10) und Spanformstufe (24) in Spanlaufrichtung konkav gekrümmt ist und wobei die Spanformstufe (24) an ihrer schneidkantenabseitigen oberen Begrenzungslinie (28) scharfkantig in ein zentrales Spantlächenplateau übergeht, **dadurch gekennzeichnet**, daß die Spanformstufe (24) zwischen Spanflächenabschnitt (20) und Spantlächenplateau (22) in Spanlaufrichtung konkav gekrümmt ist und tangential an den Spantlächenabschnitt anschließt und das Spantlächenplateau oberhalb der Schneidkante angeordnet ist.

3. Schneidplatte nach Anspruch 1 oder 2, mit mehreren ein Vieleck begrenzenden, von den kalottenförmigen Ausnehmungen (30) durchdrungenen Schneidkanten (10), **dadurch gekennzeichnet**, daß die Schneidkanten (10) im Bereich zwischen den einander über Eck (12) benachbarten Ausnehmungen (30) partiell angefast (Fase 42) sind.

4. Schneidplatte nach Anspruch 3, **dadurch gekennzeichnet**, daß die Schneidkanten (10) im Eckbereich zwischen dem Eck (12) und nur einer der benachbarten Ausnehmungen (30) unsymmetrisch angefast sind, wobei die Schneidkanten (10) in Fortsetzung der vom Eck (12) ausgehenden Fase im Bereich zwischen der dem Eck (12) benachbarten Ausnehmung und der nächsten und gegebenenfalls der übernächsten Ausnehmung (30) angefast sind.

5. Schneidplatte nach einem der Ansprüche 1 bis 3, **dadurch gekennzeichnet**, daß die Spanformstufe (24) geradlinig oder wellenförmig im wesentlichen parallel zur Schneidkante (10) verläuft und die kalottenförmigen Ausnehmungen (30) mit ihrer schneidkantenseitigen Begrenzungslinie (26) tangiert oder im Abstand von diesen angeordnet ist.

6. Schneidplatte nach Anspruch 5 mit mehreren, ein Vieleck begrenzenden, von den kalottenförmigen Ausnehmungen (30) durchdrungenen Schneidkanten (10), **dadurch gekennzeichnet**, daß die geradlinigen oder wellenförmigen Begrenzungslinien (26,28) der Spanformstufen (24) im Abstand von den Schneidkanten (10) ein ähnliches umlaufendes Vieleck bilden.

7. Schneidplatte nach einem der Ansprüche 1 bis 6, **dadurch gekennzeichnet**, daß das Abstandsmaß zwischen Schneidkante (10) und plateauseitigem Begrenzungsrand der Ausnehmungen (30) kleiner als 50%, vorzugsweise 20 bis 30% des Abstands zwischen Schneidkante (10) und schneidkantenseitiger Plateaubegrenzung (28) ist.

8. Schneidplatte nach einem der Ansprüche 1 bis 7, **dadurch gekennzeichnet**, daß der Spanwinkel (β) im Bereich der kalottenförmigen Ausnehmungen (30) an der Stelle der Schneidkante 0 bis -10° beträgt.

9. Schneidplatte nach einem der Ansprüche 1 bis 8, **dadurch gekennzeichnet**, daß der Spanwinkel (α) des konkaven Spanflächenabschnitts (20) an der Stelle der Schneikante (10) positiv ist und vorzugsweise 10 bis 25° beträgt.

10. Schneidplatte nach einem der Ansprüche 1 bis 9, **dadurch gekennzeichnet**, daß die Spanformstufe (24) an ihrer schneidkantenseitigen Begrenzungslinie (26) einen wellen- und/oder zickzack-förmigen Verlauf vorzugsweise mit einer dem Mittenabstand der Ausnehmungen (30) entsprechenden Wellenlänge aufweist.

11. Schneidplatte nach Anspruch 10, **dadurch gekennzeichnet**, daß die Spanformstufe (24) mit ihrer schneidkantenseitigen Begrenzungslinie (26) jeweils keilförmig mit zur Schneidkante (10) weisender Keilspitze in die Abstandsbereiche zwischen den Ausnehmungen (30) eingreift.

12. Schneidplatte nach Anspruch 10 oder 11, **dadurch gekennzeichnet**, daß die Spanformstufe (24) mit ihrer schneidkantenseitigen Begrenzungslinie (26) jeweils keilförmig mit zur Schneidkante (10) weisender Keilspitze in die Ausnehmungen eingreift und dort deren Oberkante bildet.

13. Schneidplatte nach einem der Ansprüche 10 bis 12, **dadurch gekennzeichnet**, daß die Spanformstufe (24) mit ihrer schneidkantenabseitigen Begrenzungslinie (28) einen im wesentlichen gleichphasig oder gegenphasig parallel zur schneidkantenseitigen Begrenzungslinie (26) verlaufenden wellen- und/oder zick-zack-förmigen Verlauf aufweist.

## Claims

1. A cutting insert for chip forming machining of metallic work pieces, having at least one cutting edge (10) limited by a rake face (16) and a clearance face (18), wherein the rake face (16) has a rake face section (20) adjoining the cutting edge (10) which has a positive rake angle (α) relative to the cutting insert plane and a plurality of dome-shaped recesses (30) which are arranged parallel to the cutting edge (10) at a distance from each other, moulded into the rake face section, limited by their upper edge with respect to the rake face section (20) and partially penetrating the cutting edge, wherein there is provided a chip forming step (24) on the side of the recesses (30) opposite the cutting edge (10) which projects beyond the rake face section (20), which step is limited by a lower limiting line on the side of the cutting edge and an upper limiting line away from the cutting edge, and wherein the rake face in the region of the dome-shaped recesses (30) has a neutral or negative rake angle (β) with respect to the cutting insert plane (40), characterized in that the recesses (30) are formed as conical, cylindrical, ellipsoid or parabolic domes penetrating the cutting edge (10) with their lowest surface line being substantially perpendicular to the clearance face (18).

2. Cutting insert according to claim 1, wherein the rake face section (20) is bent concavely between the cutting edge (10) and the chip forming step (24) in the chip traveling direction and wherein the chip forming step (24) verges in a sharp-edged manner into a central rake face plateau at its upper limiting line (28) away from the cutting edge, characterized in that the chip forming step (24) is bent concavely between the rake face section (20) and the rake face plateau (22) in the chip traveling direction and joins the rake face section tangentially and that the rake face plateau is disposed above the cutting edge.

3. Cutting insert according to claim 1 or 2, having several cutting edges (10) delimiting a polygon and being penetrated by the dome-shaped recesses (30), characterized in that the cutting edges (10) are partially chamfered in the region between the recesses (30) which are adjacent to each other via the corners of the cutting insert.

4. Cutting insert according to claim 3, characterized in that the cutting edges (10) are chamfered asymmetrically in the region of the corner area between the corner (12) and only one of the adjacent recesses (30), wherein the cutting edges (10) are chamfered in continuation of the chamfer extending from the corner (12) in the region between the recess adjacent the corner (12) and the next recess and possibly also the following recess (30).

5. Cutting insert according to any one of claims 1 to 3, characterized in that the chip forming step (20) runs linearly or wave shaped, substantially parallel to the cutting edge (10) and either touching the dome-shaped recesses (30) with its limiting line (26) at the side of the cutting edge, or being arranged at a distance therefrom.

6. Cutting insert according claim 5, having several cutting edges (10) delimiting a polygon and being penetrated by dome-shaped recesses (30), characterized in that the linear or wave-shaped limiting lines (26,28) of the chip forming steps (24) form at a distance from the cutting edges (10) a similarly contoured polygon.

7. Cutting insert according to any one of claims 1 to 6, characterized in that the distance between the cutting edge (10) and the limiting edge of the recesses (30) at the side of the plateau is less than 50%, preferably 20% to 30% of the distance between the cutting edge (10) and the plateau edge (28) at the side of the cutting edge.

8. Cutting insert according to any one of claims 1 to 7, characterized in that the rake angle (β) in the region of the dome-shaped recesses (30) is 0° to -10° at the cutting edge.

9. Cutting insert according to any one of claims 1 to 8, characterized in that the rake angle (α) of the concave rake face section (20) is positive at the cutting edge and is preferably 10° to 25°.

10. Cutting insert according to any one of claims 1 to 9, characterized in that the chip forming step (24) with its limiting line (26) at the side of the cutting edge runs in a wave- and/or zig-zag-shaped manner and preferably exhibits a wavelength corresponding to the center distance of the recesses (30).

11. Cutting insert according to claim 10, characterized in that the chip forming step (24) with its limiting line (26) at the side of the cutting edge extends wedge-shaped into the regions between the recesses (30) with the wedge tip which points to the cutting edge (10).

12. Cutting insert according to claim 10 or 11, characterized in that the chip forming step (24) with its limiting line (26) at side of the cutting edge extends wedge-shaped into the recesses with the wedge tip which points to the cutting edge, and forms there the upper edge of the recess.

13. Cutting insert according to amy one of claims 10 to 12, characterized in that the chip forming step (24) extends with its limiting line (28) away from the cutting edge wave-shaped and/or zig-zag-shaped substantially in phase or in antiphase parallel to the limiting line (26) at the side of the cutting edge.

## Revendications

1. Plaquette de coupe pour l'usinage de pièces métalliques par enlèvement de copeaux, avec au moins un tranchant (10) délimité par une face (16) d'attaque et une face (18) de dépouille, la face (16) d'attaque présentant une partie (20) de face d'attaque se raccordant au tranchant (10), dotée d'une pente (α) de coupe positive par rapport au plan de la plaquette, et de plusieurs évidements (30) formés dans la partie de face d'attaque, alignés à distance entre eux parallèlement au tranchant (10), délimités par leur bord supérieur par rapport à la partie (20) de face d'attaque et traversant partiellement le tranchant (10), un roule-copeau (24), dépassant de la partie (20) de face d'attaque et délimité par une ligne de délimitation inférieure (26) côté tranchant et une ligne de délimitation supérieure (28) côté opposé au tranchant, étant disposé sur le côté des évidements (30) qui est opposé au tranchant (10), et la face d'attaque présentant, dans la région des évidements (30), une pente (β) de coupe neutre ou négative par rapport au plan (40) de la plaquette,
**caractérisée** en ce que les évidements (30) sont réalisés sous forme de calottes cylindriques, coniques, en ellipsoïde ou en paraboloïde, traversant le tranchant (10) et se raccordant essentiellement perpendiculairement à la face (18) de dépouille par leur génératrice la plus basse.

2. Plaquette de coupe selon la revendication 1, la partie (20) de face d'attaque étant à courbure concave dans la direction d'avancement des copeaux entre le tranchant (10) et le roule-copeau (24), et le roule-copeau (24), sur sa ligne de délimitation supérieure (28) côté opposé au tranchant, se poursuivant anguleusement par un plateau central de face d'attaque, **caractérisée** en ce que le roule-copeau (24) est à courbure concave dans la direction d'avancement des copeaux entre la partie (20) de face d'attaque et le plateau (22) de face d'attaque et se raccorde tangentiellement à la partie de face d'attaque, et le plateau de face d'attaque est disposé au-dessus du tranchant.

3. Plaquette de coupe selon la revendication 1 ou 2, avec plusieurs tranchants (10) délimitant un polygone et traversés par les évidements (30) en forme de calottes, **caractérisée** en ce que les tranchants (10) sont partiellement chanfreinés (chanfrein 42) dans la région comprise entre les évidements (30) mutuellement voisins par un coin (12).

4. Plaquette de coupe selon la revendication 3, **caractérisée** en ce que les tranchants (10) sont asymétriquement chanfreinés dans la région de coin entre le coin (12) et un seul des évidements voisins (30), les tranchants (10) étant chanfreinés, dans le prolongement du chanfrein partant du coin (12), dans la région comprise entre l'évidement voisin du coin (12) et l'évidement suivant, et éventuellement le second évidement suivant (30).

5. Plaquette de coupe selon une des revendications 1 à 3, **caractérisée** en ce que le roule-copeau (24) s'étend de façon rectiligne ou ondulée essentiellement parallèlement au tranchant (10) et, par sa ligne de délimitation (26) côté tranchant, est tangent aux évidements (30) en forme de calottes ou disposé à distance de ces derniers.

6. Plaquette de coupe selon la revendication 5, avec plusieurs tranchants (10) délimitant un polygone et traversés par les évidements (30) en forme de calottes, **caractérisée** en ce que les lignes de délimitation rectilignes ou ondulées (26, 28) des roule-copeaux (24) forment à distance des tranchants (10) un polygone de contour analogue.

7. Plaquette de coupe selon une des revendications 1 à 6, **caractérisée** en ce que la cote d'écartement entre le tranchant (10) et le bord de délimitation côté plateau des évidements (30) est inférieure à 50%, et de préférence 20 à 30%, de la distance entre le tranchant (10) et la délimitation (28) du plateau côté tranchant.

8. Plaquette de coupe selon une des revendications 1 à 7, **caractérisée** en ce que la pente (β) de coupe est comprise entre 0 et -10° dans la région des évidements (30) en forme de calottes, à l'endroit du tranchant.

9. Plaquette de coupe selon une des revendications 1 à 8, **caractérisée** en ce que la pente (α) de coupe de la partie concave (20) de face d'attaque est positive à l'endroit du tranchant, et est de préférence comprise entre 10 et 25°.

10. Plaquette de coupe selon une des revendications 1 à 9, **caractérisée** en ce que le roule-copeau (24) présente, sur sa ligne de délimitation (26) côté tranchant, une allure ondulée et/ou en zigzag, de préférence avec une longueur d'ondulation correspondant à la distance de centre à centre des évidements (30).

11. Plaquette de coupe selon la revendication 10, **caractérisée** en ce que le roule-copeau (24), par sa ligne de délimitation (26) côté tranchant, s'engage respectivement en forme de coin, avec la pointe du coin tournée vers le tranchant (10), dans les espacements entre les évidements (30).

12. Plaquette de coupe selon la revendication 10 ou 11, **caractérisée** en ce que le roule-copeau (24), par sa ligne de délimitation (26) côté tranchant, s'engage respectivement en forme de coin, avec la pointe du coin tournée vers le tranchant (10), dans les évidements, et y forme leur bord supérieur.

13. Plaquette de coupe selon une des revendications 10 à 12, **caractérisée** en ce que le roule-copeau (24), par sa ligne de délimitation (28) côté opposé au tranchant, présente une allure ondulée et/ou en zigzag s'étendant essentiellement en phase ou en opposition de phase parallèlement à la ligne de délimitation (26) côté tranchant.
